# EUROPEAN PATENT SPECIFICATION

(11) **EP 1 725 451 B1**
(45) Date of publication and mention of the grant of the patent: **22.06.2011**
(21) Application number: 05722046.9
(22) Date of filing: 15.03.2005
(51) Int. Cl.: B64F 1/36

(54) **CHECK-IN SYSTEM FOR LUGGAGE**
GEPÄCKAUFGABESYSTEM
SYSTEME D'ENREGISTREMENT DE BAGAGE

(30) Priority: 18.03.2004 NL 1025759
(43) Date of publication of application: 29.11.2006
(73) Proprietor: Vanderlande Industries B.V., 5466 RB Veghel (NL)
(72) Inventor: VAN WIERINGEN, Antonij, NL-5421 DP Gemert (NL)
(74) Representative: Dorna, Peter
(86) International application number: PCT/NL2005/000191
(87) International publication number: WO 2005/087590

(56) References cited:
- EP-A- 0 770 546
- EP-A- 1 067 068
- DE-A- 10 040 550
- US-A1- 2002 176 532

## Description

The present invention relates to a check-in system for luggage, comprising a number of check-in units, each provided with a discharge conveyor for discharging luggage, which is controlled by control means, and an automatic check-in unit disposed near the beginning of the discharge conveyor, by means of which a passenger can check in luggage himself.

It is known that passengers for a flight check in at a manned check-in counter some time before the departure of the flight, at which counter they can check in themselves as well as their luggage for the flight in question upon presentation of certain documents. At the check-in counter they are assisted by a check-in operator, who provides the passenger's luggage, in so far it is not hand luggage, with a label on which an identification number relating at least to the destination of the flight is indicated in letters, a bar code and/or otherwise. To that end the passenger places the luggage on a conveyor that extends along the check-in counter. Before the check-in operator attaches the label to the luggage, a check is made whether the luggage does not exceed a particular allowed weight or whether the dimensions thereof do not exceed allowable dimensions. If such is the case, the passenger and his luggage must proceed to another counter for special luggage and check-in his or her luggage there, possibly at additional cost.

Especially for passengers who only have hand luggage it is known to use unmanned check-in counters, where the passenger can in principle check in himself without the interference of a check-in operator, with the check-in counter issuing a boarding pass on the basis of certain travelling documents.

A recent development with regard to these unmanned check-in systems is that they are being adapted for checking in not only passengers but also the passengers' luggage. To that end a discharge conveyor extends along an unmanned automatic check-in unit, just like the situation at a manned check-in counter. In the first part of the discharge conveyor the weight of the luggage to be checked in is determined, and if said weight is different from an allowable weight, the passenger is informed via the automatic check-in unit, for example via a display screen thereof, that the luggage in question is too heavy or possibly too light. In that case the passenger must proceed to another counter or reduce the weight of the luggage, for example. If the weight of the piece of luggage is all right, the passenger is expected to attach a label to the piece of luggage himself, which label is issued independently by the check-in counter. Then the discharge conveyor transports the piece of luggage under a detection gate, which is provided on the one hand with reading means for reading information on the label that is attached to the piece of luggage. On the other hand the detection gate comprises light screens by means of which the main dimensions (length, width, depth) of a piece of luggage are determined. If the main dimensions of the piece of luggage do not deviate from specific allowed values, the discharge conveyor will discharge the piece of luggage for further automatic handling. If the piece of luggage is too large or too small, the discharge conveyor will return it to the start of the discharge conveyor and thus to the passenger, who subsequently must proceed to a separate counter for deviating luggage.

Now that the above-described unmanned check-in counters for checking in passengers and luggage have been in use for some time, these unmanned check-in counters appear not to be completely satisfactory after all, since it has become apparent in practice that it is not possible on the basis of the criteria as regards weight and main dimensions for luggage to be checked in to determine with certainty that a particular piece of luggage is suitable for being handled in the normal, automated manner by a luggage handling system disposed downstream of a check-in unit. It appears that some pieces of luggage, on account of their nature, are simply unsuitable for the standard automated system of luggage handling. At manned check-in counters these pieces of luggage are immediately identified, partially by instinct, by the check-in operator; at an unmanned check-in counter such identification does not take place, however. Examples of pieces of luggage which meet the criteria as regards weight and dimensions, but which, on account of their nature, are nevertheless unsuitable for being handled in a standard automated process are, for example, a cylindrical body, such as a tube in which a poster is stored, a spherical object such as a soccer ball, and/or a cage in which animals are present. Due to the above-mentioned shortcoming, extra personnel is needed at the unmanned check-in counters after all in practice to assist passengers who are checking in their luggage and themselves and to prevent unsuitable pieces of luggage being checked in. In that sense part of the advantage gained by the use of unmanned check-in systems, viz. reducing personnel costs, is lost again.

According to European application EP-A1-770 546, which shows all the features of the preamble of claim 1, cameras are used at a check-in system for observing passengers who are checking in. In addition to that, use is made of a detector by means of which the dimensions of luggage can be determined and which is capable of reading a label that is attached to luggage.

European patent application EP 1 067 068 A1 discloses a luggage handling system disposed downstream of a check-in system, which uses a paternoster like vertical conveying system for transferring pieces of luggage from an upper conveyor to a lower conveyor, according to which system impermissible manipulations at the location of the vertical conveying system, more specifically in the upward part thereof, in which the containers of the conveying system are considered not to be filled with luggage, can be detected through video monitoring.

The object of the invention is to provide a check-in system in which passengers can check in themselves and their luggage on their own, but in which on the other hand the risk of unsuitable luggage being checked in is minimized, whilst a minimum number of personnel is required. To that end each check-in unit is provided with a camera for detecting luggage on the discharge conveyor, with the check-in system comprising an assessment station for assessing luggage detected by the cameras on the basis of the images recorded by the cameras, as well as first communication means for passing information regarding images recorded by the cameras from the cameras to the assessment station, wherein the assessment station comprises image processing means for the automated processing of the information passed on by the first communication means and for assessing luggage on the basis of the results of said automated processing. The use of cameras for detecting pieces of luggage makes it possible to verify in a structured and thus efficient manner whether said pieces of luggage, in view of their nature, are suitable for being handled in an automated luggage handling process. This advantage in particular results from the fact that luggage on the one hand and the assessment station on the other hand may not be present at the same location, so that the assessment station is also capable of assessing luggage on discharge conveyors of check-in units that are present at locations which are separated from each other by a relatively large distance. If the system comprises a number of assessing stations, said stations may be jointly manned by one person.

Because of the presence of said image processing means a maximum saving on the required personnel capacity is realised. The artificial intelligence of the image processing means is capable of assessing at least certain types of luggage which, in view of their nature, are unsuitable for being handled in a standard automated luggage handling process, as negative (for the time being). If the fact that a piece of luggage is unsuitable is so obvious that the image processing means can assess with a high degree of certainty that such is the case, the image processing means can break off the process of checking in a piece of luggage of its own accord, without human interference, on the basis of the assessment by the image processing means, and the piece of luggage in question can be presented to the passenger again by reversing the direction in which the discharge conveyor is driven, if necessary, so that the passenger can apply elsewhere with the piece of luggage in question. Think of infrared detection by a camera in this connection, on the basis of which it can be determined, for example, that a living animal forms part of the luggage. In case of doubt it is also possible, of course, for the image processing means to present the piece of luggage, or at least the image data relating thereto, anew for human assessment of the piece of luggage in question.

Supplementary to the above embodiment, the assessment station is within this framework preferably arranged for processing the information passed on by the first communication mans on the basis of human interference and for assessing luggage on the basis of the results of said human interference. On the one hand the assessment station may thus subject all the luggage that is checked in via the check-in system according to the invention to human assessment. On the other hand the image processing means may make a first selection between luggage pieces which can be assessed with certainty as being suitable or unsuitable for being handled in an automated luggage handling process on the one hand and pieces of luggage whose suitability cannot be assessed with certainty by the image processing means on the other hand. The latter group might then be presented for human assessment within the assessment station. The personnel capacity required for assessing luggage on the basis of human interference at the assessment station is significantly smaller than the capacity that is required at check-in systems according to the prior art, in which each check-in system is manned. The reason for this is that the staff members who assess luggage on the basis of human interference at the assessment station only need to occupy themselves with this specific activity, whilst all kinds of other activities that are carried out by the check-in operators at the manned check-in counters according to the prior art are carried out either by the passengers themselves or as part of an automated process. Such activities are attaching labels to the luggage and assessing the weight of a piece of luggage, for example.

Quite preferably, the cameras are arranged for recording moving images. Thus it is also possible to assess the mass inertia behaviour of a piece of luggage during transport on the discharge conveyor, which may provide important information as to the suitability of the piece of luggage for being handled in an automated process. In this way a "rolling" piece of luggage can be identified.

Furthermore, the cameras are preferably arranged for detecting infrared radiation, so that the cameras are quite suitable for distinguishing living creatures, even if they do not move. Being able to detect moving images and/or infrared radiation is very important for safety reasons, therefore, because this makes it possible to detect unauthorized persons trying to reach the room upstream of the discharge conveyor by way of the discharge conveyor.

Quite preferably, second communication means are provided for communication between the assessment station and an automatic check-in unit. Not only does this make it possible to inform a passenger present at an automatic check-in unit that a piece of luggage has been approved but, more importantly even, it can be indicated that the piece of luggage has not been approved, possibly stating reasons why the piece of luggage in question cannot be checked in at the check-in unit that forms part of the check-in system according to the invention.

The second communication means may operate in all kinds of different manners, but preferably they are arranged for oral communication with a passenger. Passengers will experience this as the most customer-friendly manner of communication.

Furthermore preferably, third communication means are provided for communication between the assessment station and the control means. Thus a suitable control signal can be transmitted to the control means via the third communication means in dependence on the assessment by the assessment station so as to either have the discharge conveyor discharge a piece of luggage or carry back a piece of luggage to a passenger or at least present it to a passenger again.

To make it possible to provide personal assistance to a passenger quickly at a check-in unit where a passenger is being confronted with a negative assessment of his luggage, signalling means may be provided for delivering a signal associated with a specific check-in unit on the basis of the assessment of a piece of luggage by the assessment station. Such a signal may be a light signal and/or an acoustic signal, for example, at the location of the check-in unit in question, so that personnel present in the vicinity of the check-in unit will directly know that assistance is needed at the check-in unit in question. Alternatively, a signal can be transmitted more discretely to a mobile means of communication, such as a staff member's mobile telephone, for example in the form of an SMS message, so that the latter can read where assistance is required and proceed to the location in question.

Quite preferably, the discharge conveyor comprises at least an upstream discharge conveyor portion and a downstream discharge conveyor portion, which can be driven independently of each other, said upstream discharge conveyor portion comprising weighing means for weighing luggage present on said upstream discharge conveyor portion and said camera being arranged for detecting luggage at least on the downstream conveyor portion. By dividing the discharge conveyor in this manner, an increased handling capacity of luggage on the discharge conveyor is obtained on the one hand, whilst on the other hand luggage that is too heavy will not be detected by the camera, which would additionally burden the assessment station.

An increased capacity of the discharge conveyor can also be obtained if the discharge conveyor comprises a buffer discharge conveyor portion that can be driven independently of the remaining portion of the discharge conveyor, which buffer portion is disposed downstream of the portion of the discharge conveyor where luggage is monitored by the camera. Luggage may be temporarily stored on the buffer discharge conveyor portion if further handling of the luggage by the luggage handling system is not possible.

Preferably, each check-in unit is provided with reading means for reading labels on luggage on the discharge conveyor. Because separate reading means are used, it is no longer necessary to use the camera that is present at each check-in unit for reading labels and luggage, so that an optimum use can be made of said camera.

The same advantage applies to the preferred embodiment in which each check-in unit is provided with at least one light curtain for determining the main dimensions of luggage.

In a strongly preferred embodiment, the first, second and/or third communication means form part of a computer network. This makes it possible to use the check-in system according to the invention with a high degree of flexibility as regards the locations at which work is carried out.

Preferably, the computer network is the Internet. Within this variant it is even conceivable to have the assessment of luggage take place in an entirely different city or even in an entirely different country from the city or the country in which the passenger who is checking in is present.

The invention will now be explained in more detail by means of a description of a preferred embodiment of the invention, in which reference is made to the following figures.
Figure 1 is a perspective view of a check-in unit that forms part of a check-in system according to the invention.
Figure 2 schematically shows the check-in system according to the invention.

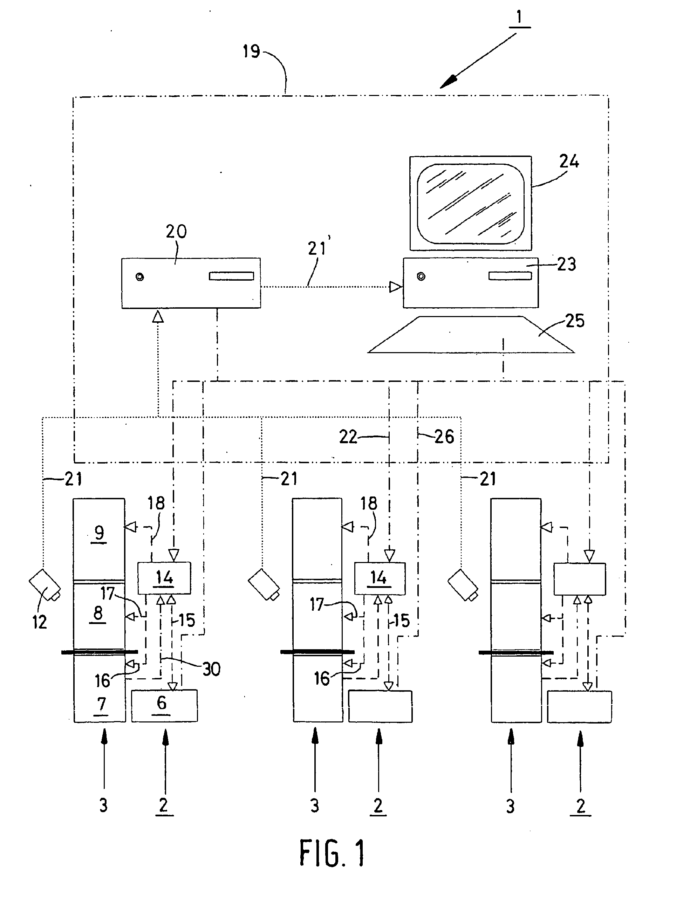

Figure 1 schematically shows a check-in system 1 according to the invention. The check-in system 1 comprises three identical check-in systems 2, which number will be much larger in practice for that matter, in which case the advantages of the present invention will also become greater.

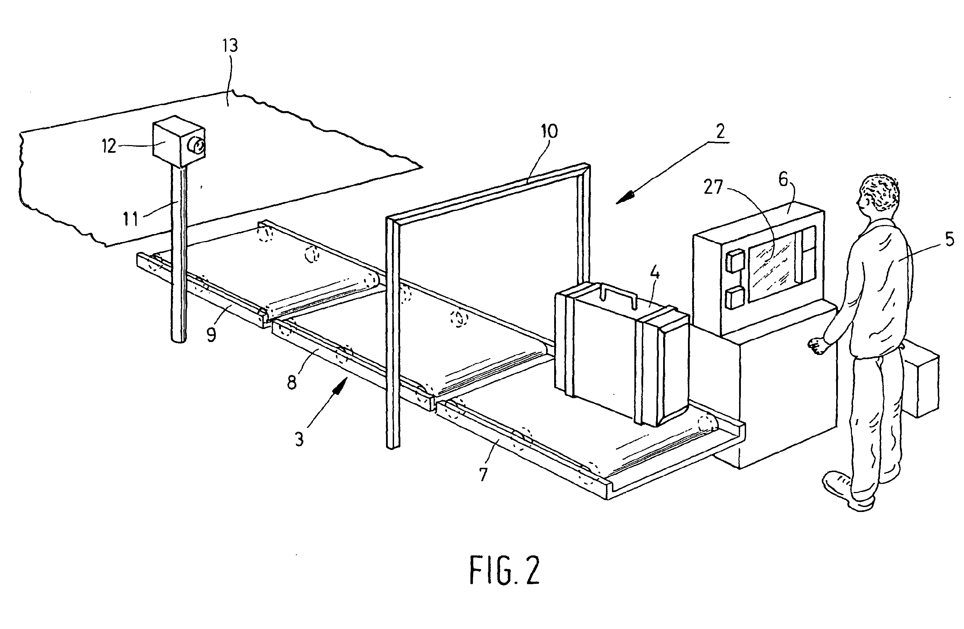

Figure 2 is a perspective view of a conveying unit 2. The conveying units 2 each comprise a discharge conveyor 3 for discharging a piece of luggage 4 of a passenger 5 who is checking in himself and the piece of luggage 4 at the unmanned check-in unit for a flight. The discharge conveyor 3 is built up of three sub-conveyors connecting to each other, viz. a weighing conveyor 7, a detection conveyor 8 and a buffer conveyor 9. To check in, the passenger 5 places the piece of luggage 4 on the weighing conveyor 7. Although this is not shown in figure 2, the piece of luggage 4 may also be placed into a conveyor, also called tub, by the passenger, so that the subsequent automatic handling of the luggage can take place in a simpler and more reliable manner on account of the uniformity among the various tubs, which does not exist among the various pieces of luggage, of course. A detection gate 10 is disposed at the transition between the weighing conveyor 7 and the detection conveyor 8, which detection gate is known per se and which on the one hand comprises light screens for determining the main dimensions of a suitcase 4 upon passage of the gate 10, whilst on the other hand the gate 10 is provided with reading means, such as a bar code reader, by means of which information present on a label attached to the suitcase 4, inter alia relating to the destination, can be read. Said label is issued by the automatic check-in unit 6, after it has been determined on the weighing conveyor 7 that the weight of the suitcase does not exceed a particular allowable weight. After the label has been issued, it is attached to the suitcase 4 by the passenger himself.

A post 11, on which a CCD camera 12 is mounted, is disposed on the outer side of the transition between the detection conveyor 8 and the buffer conveyor 9. The camera 12 is oriented so that the area between the detection conveyor 8 can be monitored by the camera 12.

A main discharge conveyor 13 connects to the buffer conveyor 9, at right angles thereto, to which main discharge conveyor other buffer conveyors 9 of discharge conveyors 3 of other check-in units 2 connect.

Figure 1 shows the check-in units 2, one of which is schematically shown in figure 2, including a control system 14 for suitably controlling the discharge conveyor 3, more specifically the weighing conveyor 7, the detection conveyor 8 and the buffer conveyor 9 thereof. The control unit 14 receives input signals 15, 30 from the automatic check-in unit 6 and from the weighing conveyor 7, respectively, and transmits control signals 15, 16, 17, 18 to the automatic check-in unit 6, the weighing conveyor 7, the detection conveyor 8 and the buffer conveyor 9, respectively.

Besides the check-in units 2, the check-in system 1 furthermore comprises an assessment station 19. The function of the assessment station 19 is to assess pieces of luggage 4 on the basis of the images recorded by the camera 12 for criteria that cannot be assessed by means of the weighing conveyor 7 and the gate 10. Examples in this connection are pieces of luggage having an unsuitable shape, for example a spherical shape such as a soccer ball, or pieces of luggage in which living creatures are present, for example chickens in a basket. To that end, the assessment station 19 comprises artificial intelligence in the form of a computer system 20, which is capable of analysing the image signals 21 that are fed to the computer system from the cameras 12, using suitable software, and of independently assessing, without human interference, whether a piece of luggage meets the additional criteria in question. One can imagine in this connection that the computer system 20 detects that living creatures belong to the piece of luggage 4, for example on the basis of information about the infrared radiation characteristics of the piece of luggage 4 or about the nature of any movements thereof as detected by the camera 12. Furthermore it can be established whether the piece of luggage 4 is moving with respect to the discharge conveyor 3 upon transfer of the piece of luggage 4 from the weighing conveyor 7 to the detection conveyor 8, which may be an indication that the piece of luggage 4 tends to roll away. In addition to that, the computer system is capable of identifying the shape of the piece of luggage 4 and determining on the basis thereof that the piece of luggage 4 in question is not suitable for being handled in the usual automated luggage handling process after the conveying units 2.

If the computer system 20 sees no reason to assume that the piece of luggage 4 is unsuitable, the computer system 20 delivers a control signals 22 to the control unit 14 associated with the check-in unit 2 in question, so that the check-in procedure can be continued for the piece of luggage by transferring the piece of luggage 4 from the detection conveyor 8 to the buffer conveyor 9 by simultaneously driving the detection conveyor 8 and the buffer conveyor 9. As soon as space is available on the main discharge conveyor 13, the piece of luggage 4 is transferred from the buffer conveyor 9 to the main discharge conveyor 13, to which end the control unit 14 receives an input signal (not shown) from the main control system associated with the main discharge conveyor 13.

If the computer system 20 determines that a piece of luggage 4 does not meet the relevant criteria, the image information 21' is passed on to a manned computer system 23 provided with a display screen 24. The images as recorded by the camera 12 are displayed on the display screen 24 there, whether or not electronically manipulated, such as filtered, so that the staff member manning the computer system 23 can assess on the basis of human evaluation whether the piece of luggage 4 is suitable or not. On the one hand any shortcomings that the unmanned computer system 20 may still have as regards the assessment of a piece of luggage 4 are compensated in this way, so that a piece of luggage 4 is not needlessly rejected, whilst on the other hand the staff member that mans the computer system 23 is not burdened with assessing pieces of luggage about which there is no reasonable doubt on the basis of the observations by the camera 12 that the additional criteria are met. If the assessment of the staff member of the piece of luggage 4 is positive, the staff member can deliver a control signal 22 to the control unit in 14 of the check-in unit in question by touching a suitable key on the keyboard 25 that implies that the check-in procedure can be continued by transferring the piece of luggage 4 from the detection conveyor 8 to the buffer conveyor 9. Once a piece of luggage 4 has thus been definitively approved, a boarding pass is delivered at the automatic check-in unit 6. If it would be delivered sooner, there would be a risk of the passenger in question already having moved away from the automatic check-in unit 6 whilst the piece of luggage 4 is considered unsuitable for being checked in by the assessment station 19 and is consequently carried back from the detection conveyor 8 to the weighing conveyor 7, so that said piece of luggage 4 will remain unattended. If the staff member arrives at a negative decision, a control signal 22 is likewise delivered to the control unit 14, which control signal in this case implies that the check-in procedure cannot be continued, however, and that the piece of luggage in question must be carried back to the passenger 5 by driving the detection conveyor 8 and the weighing conveyor 7 simultaneously in reverse direction. In addition to that a signal 26 will be transmitted to the automatic check-in unit 6 in question, in any case upon rejection of these of luggage 4, so as to inform the passenger 5 of the rejection of his or her piece of luggage 4, for example by displaying this information on the display screen 27 of the automatic check-in unit 6. Alternatively, or in combination therewith, the signal 26 may also be arranged for transferring oral (acoustic) information in that the computer system 23 is provided with a microphone and the automatic check-in unit 6 is provided with a loudspeaker. Optimum communication is possible, of course, if the automatic check-in unit 6 is provided with a microphone as well, while the computer system 23 is provided with a loudspeaker, thus enabling verbal communication between the passenger 5 and the staff member in question, so that the staff member can explain to the passenger 5, for example, why a piece of luggage is being rejected, or ask the passenger 5 to adapt the piece of luggage 4 or possibly position it differently in such a manner that it can be approved yet.

Within the framework of the invention, the assessment station 19 may also be arranged in a different manner. As the intelligence of the computer system 20 increases, it may no longer be necessary to use a manned computer system 23. In addition to that it may be considered not to use the unmanned computer system 20 at all, so that every piece of luggage 4 is assessed at the manned computer system 23. It should be realised in this connection that the physical distance that exists between the assessment station 19 and the conveying units 2 may be large, so large even that borders are crossed, so that the staff member manning the computer system 23 may be working in a region/country where wages are comparatively low.

Alternatively, or in combination therewith, it is also possible for the assessment station 19 to deliver a signal to alert the staff member who is physically present in the vicinity of the check-in units 2 that assistance is required at a particular check-in unit 2. Such a signal may be a light signal from a lamp on the automatic check-in unit 6, for example, or a (wireless) signal to a mobile telephone of the staff member.

If the computer system 20, after having decided that a piece of luggage does not meet the criteria, has passed image information 21' to a manned computer system provided with a display screen 24, it is also possible within the framework of the present invention for the final assessment of the staff member in question to be fed back to the computer system 20, so that said system will "learn" from the final decisions of the staff member in question, so that in the long run the staff member will be burdened less and less with image information 21' being passed to the manned computer system 23 by the computer system 20.

## Claims

1. A check-in system (1) for luggage (4), comprising a number of check-in units (2), each provided with a discharge conveyor (3) for discharging luggage (4), which is controlled by control means (14), and an automatic check-in unit (6) disposed near the beginning of the discharge conveyor (3), by means of which a passenger (5) can check in luggage (4) himself, **characterized in that** each check-in unit (2) is provided with a camera (12) for detecting luggage (4) on the discharge conveyor (3), with the check-in system (1) comprising an assessment station (19) for assessing luggage (4) detected by the cameras (12) on the basis of the images recorded by the cameras (12), as well as first communication means (21) for passing information regarding images recorded by the cameras (12) from the cameras to the assessment station (19),
wherein the assessment station (19) comprises image processing means (20) for the automated processing of the information passed on by the first communication means (21) and for assessing luggage (4) on the basis of the results of said automated processing.

2. A check-in system according to claim 1, **characterized in that** the assessment station (19) is arranged for processing the information passed on by the first communication means (21) on the basis of human interference and for assessing luggage (4) on the basis of the results of said human interference.

3. A check-in system according to any one of the preceding claims, **characterized in that** the cameras (12) are arranged for recording moving images.

4. A check-in system according to any one of the preceding claims, **characterized in that** the cameras (12) are preferably arranged for detecting infrared radiation.

5. A check-in system according to any one of the preceding claims, **characterized in that** second communication means (26) are provided for communication between the assessment station (19) and an automatic check-in unit (6).

6. A check-in system according to claim 5, **characterized in that** the second communication means (26) are arranged for oral communication with a passenger (5).

7. A check-in system according to any one of the preceding claims, **characterized in that** third communication means (22) are provided for communication between the assessment station (19) and the control means (14).

8. A check-in system according to any one of the preceding claims, **characterized in that** signalling means are provided for delivering a signal associated with a specific check-in unit (2) on the basis of the assessment of a piece of luggage (4) by the assessment station (19).

9. A check-in system according to any one of the preceding claims, **characterized in that** the discharge conveyor (3) comprises at least an upstream discharge conveyor portion (7) and a downstream discharge conveyor portion (8), which can be driven independently of each other, said upstream discharge conveyor portion (7) comprising weighing means for weighing luggage (4) present on said upstream discharge conveyor portion (7) and said camera (12) being arranged for detecting luggage (4) at least on the downstream conveyor portion. (8)

10. A check-in n system according to any one of the preceding claims, **characterized in that** the discharge conveyor (3) comprises a buffer discharge conveyor portion (9) that can be driven independently of the remaining portion (7,8) of the discharge conveyor (3), which buffer portion (9) is disposed downstream of the portion (8) of the discharge conveyor (3) where luggage (4) is monitored by the camera (12).

11. A check-in system according to any one of the preceding claims, **characterized in that** each check-in unit (2) is provided with reading means (10) for reading labels on luggager (4) on the discharge conveyor (3).

12. A check-in system according to any one of the preceding claims, **characterized in that** each check-in unit (2) is provided with at least one light curtain (10) for determining the main dimensions of luggage (4).

13. A check-in system according to any one of the preceding claims when depending on claims 1, 5 or 7, **characterized in that** the first (21), second (26) and/or third (22) communication means form part of a computer network.

14. A check-in system according to claim 13, **characterized in that** said computer network is the Internet.

## Patentansprüche

1. Check-in-System (1) für Gepäck (4), umfassend eine Vielzahl von Check-in-Einheiten (2), wobei jede der Check-in-Einheiten (2) mit einem Entlade-Transportband (3) zum Abtransportieren von Gepäck (4) versehen ist, und wobei jedes der Entlade-Transportbänder (3) von einer Kontrolleinheit (14) gesteuert ist, wobei eine automatische Check-in-Einheit (6) in der Nähe des Anfangs des Entlade-Transportbandes (3) aufgestellt ist, mit dessen Hilfe ein Passagier (5) Gepäck (4) selbstständig einchecken kann, **dadurch gekennzeichnet, dass** jede Check-in-Einheit (2) mit einer Kamera (12) zur Detektion von Gepäck (4) auf dem Entlade-Transportband (3) versehen ist, wobei das Check-in-System (1) eine Prüfstation (19) zur Prüfung von von den Kameras (12) erfassem Gepäck (4) auf der Basis der von den Kameras (12) aufgenommen von Bildern umfasst, und wobei das Check-in-System (1) außerdem eine erste Kommunikationseinheit (21) umfasst, die Informationen von den Kameras (12) an die Prüfstation (19) übergibt, wobei die Informationen die von den Kameras (12) aufgenommenen Bilder betreffen, und
wobei die Begutachtungsstation (19) eine Bildverarbeitungseinheit (20) zur automatischen Verarbeitung von Informationen, die von der ersten Kommunikationseinheit (21) übergegeben wurden, und zur Begutachtung von Gepäck (4) auf der Basis der Ergebnisse dieser automatischen Verarbeitung umfasst.

2. Check-in-System nach Anspruch 1, **dadurch gekennzeichnet, dass** die Prüfstation (19) dazu eingerichtet ist die Informationen, die von der ersten Kommunikationseinheit (21) übergeben wurden, auf der Basis eines menschlichen Eingriffs zu verarbeiten und Gepäck (4) auf der Basis der Ergebnisse dieses menschlichen Eingriffs zu prüfen.

3. Check-in-System nach einem der vorhergehenden Ansprüche, **dadurch gekennzeichnet, dass** die Kameras (12) zur Aufnahme von bewegten Bildern eingerichtet sind.

4. Check-in-System nach einem der vorhergehenden Ansprüche, **dadurch gekennzeichnet, dass** die Kameras (12) vorzugsweise zur Detektion von Infrarotstrahlung eingerichtet sind.

5. Check-in-System nach einem der vorhergehenden Ansprüche, **dadurch gekennzeichnet, dass** eine zweite Kommunikationseinheit (26) zur Kommunikation zwischen der Prüfstation (19) und einer automatischen Check-in-Einheit (6) zur Verfügung gestellt ist.

6. Check-in-System nach Anspruch 5, **dadurch gekennzeichnet, dass** die zweiten Kommunikationseinheit (26) für eine Sprachkommunikation mit dem Passagier (5) eingerichtet sind.

7. Check-in-System nach einem der vorhergehenden Ansprüche, **dadurch gekennzeichnet, dass** eine dritte Kommunikationseinheit (22) zur Kommunikation zwischen der Prüfstation (19) und der Kontrolleinheit (14) zur Verfügung gestellt ist.

8. Check-in-System nach einem der vorhergehenden Ansprüche, **dadurch gekennzeichnet, dass** eine Signaleinheit zur Abgabe eines Signals, welches einer spezifischen Check-in-Einheit (2) zugeordnet ist, zur Verfügung gestellt ist, wobei das Signal auf der Basis der Prüfung eines Gepäckstücks (4) durch die Prüfstation (19) basiert.

9. Check-in-System nach einem der vorhergehenden Ansprüche, **dadurch gekennzeichnet, dass** das Entlade-Transportband (3) zumindest einen vorgelagerten Entlade-Förderband-Teil (7) und einen nachgelagerten Entlade-Förderband-Teil (8) umfasst, welche unabhängig voneinander angetrieben werden können, wobei der vorgelagerte Entlade-Förderband-Teil (7) eine Wiegevorrichtung zum Wiegen von Gepäck (4), welches sich auf dem vorgelagerten Teil (7) des Entlade-Förderbands befindet aufweist und wobei die Kamera (12), die zur Detektion von Gepäck (4) dient, zumindest an dem nachgelagerten Teil (8) des Entlade-Förderbands angeordnet ist.

10. Check-in-System nach einem der vorhergehenden Ansprüche, **dadurch gekennzeichnet, dass** das Entlade-Förderband (3) einen Entlade-FörderbandPufferteil (9) umfasst, der unabhängig von dem übrigen Teil (7, 8) des Entlade-Förderbands (3) angetrieben werden kann, wobei der Pufferteil (9) nachgelagert demjenigen Teil (8) des Entlade-Förderbands (3) in welchem Gepäck (4) von der Kamera (12) überwacht wird angeordnet ist.

11. Check-in-System nach einem der vorhergehenden Ansprüche, **dadurch gekennzeichnet, dass** jede Check-in-Einheit (2) mit einer Lesevorrichtung (10) zum Lesen einer Kennzeichnung an dem Gepäck (4) auf dem Entlade-Transportband (3) versehen ist.

12. Check-in-System nach einem der vorhergehenden Ansprüche, **dadurch gekennzeichnet, dass** jede Check-in-Einheit (2) mit zumindest einem Lichtgitter (10) zur Bestimmung der Hauptabmessungen des Gepäcks (4) versehen ist.

13. Check-in-System nach einem der vorhergehenden Ansprüche, sofern diese von den Ansprüchen 1, 5 oder 7 abhängen, **dadurch gekennzeichnet, dass** die ersten (21), die zweiten (26) und/oder die dritten (22) Kommunikationseinheiten einen Teil eines Computernetzwerks bilden.

14. Check-in-System nach Anspruch 13, **dadurch gekennzeichnet, dass** das Computernetzwerk das Internet ist.

## Revendications

1. Système d'enregistrement (1) de bagages (4), comprenant un certain nombre d'unités d'enregistrement (2), chacune prévue avec un convoyeur de décharge (3) pour décharger des bagages (4), qui est commandé par des moyens de commande (14), et une unité d'enregistrement automatique (6) disposée à proximité du début du convoyeur de décharge (3), au moyen de laquelle un passager (5) peut enregistrer les bagages (4) lui-même, **caractérisé en ce que** chaque unité d'enregistrement (2) est prévue avec une caméra (12) pour détecter les bagages (4) sur le convoyeur de décharge (3), avec le système d'enregistrement (1) qui comprend une station d'évaluation (19) pour évaluer les bagages (4) détectés par les caméras (12) en fonction des images enregistrées par les caméras (12), ainsi que des premiers moyens de communication (21) pour faire passer l'information concernant les images enregistrées par les caméras (12), des caméras jusqu'à la station d'évaluation (19),
dans lequel la station d'évaluation (19) comprend des moyens de traitement d'image (20) pour le traitement automatique de l'information communiquée par les premiers moyens de communication (21) et pour évaluer les bagages (4) en fonction des résultats dudit traitement automatique.

2. Système d'enregistrement selon la revendication 1, **caractérisé en ce que** la station d'évaluation (19) est agencée pour traiter l'information communiquée par les premiers moyens de communication (21) en fonction de l'interférence humaine et pour évaluer les bagages (4) en fonction des résultats de ladite interférence humaine.

3. Système d'enregistrement selon l'une quelconque des revendications précédentes, **caractérisé en ce que** les caméras (12) sont agencées pour enregistrer des images mobiles.

4. Système d'enregistrement selon l'une quelconque des revendications précédentes, **caractérisé en ce que** les caméras (12) sont de préférence agencés pour détecter le rayonnement infrarouge.

5. Système d'enregistrement selon l'une quelconque des revendications précédentes, **caractérisé en ce que** des deuxièmes moyens de communication (26) sont prévus pour la communication entre la station d'évaluation (19) et l'unité d'enregistrement automatique (6).

6. Système d'enregistrement selon la revendication 5, **caractérisé en ce que** les deuxièmes moyens de communication (26) sont agencés pour la communication orale avec un passager (5).

7. Système d'enregistrement selon l'une quelconque des revendications précédentes, **caractérisé en ce que** des troisièmes moyens de communication (22) sont prévus pour la communication entre la station d'évaluation (19) et les moyens de commande (14).

8. Système d'enregistrement selon l'une quelconque des revendications précédentes, **caractérisé en ce que** des moyens de signalement sont prévus pour délivrer un signal associé à une unité d'enregistrement spécifique (2) en fonction de l'évaluation d'un bagage (4) par la station d'évaluation (19).

9. Système d'enregistrement selon l'une quelconque des revendications précédentes, **caractérisé en ce que** le convoyeur de décharge (3) comprend au moins une partie de convoyeur de décharge en amont (7) et une partie de convoyeur de décharge en aval (8), qui peuvent être entraînées indépendamment l'une de l'autre, ladite partie de convoyeur de décharge en amont (7) comprenant des moyens de pesage pour peser le bagage (4) présent sur ladite partie de convoyeur de décharge en amont (7) et ladite caméra (12) étant agencée pour détecter le bagage (4) au moins sur la partie de convoyeur en aval (8).

10. Système d'enregistrement selon l'une quelconque des revendications précédentes, **caractérisé en ce que** le convoyeur de décharge (3) comprend une partie de convoyeur de décharge tampon (9) qui peut être entraînée indépendamment de la partie résiduelle (7, 8) du convoyeur de décharge (3), laquelle partie tampon (9) est disposée en aval de la partie (8) du convoyeur de décharge (3) où les bagages (4) sont surveillés par la caméra (12).

11. Système d'enregistrement selon l'une quelconque des revendications précédentes, **caractérisé en ce que** chaque unité d'enregistrement (2) est prévue avec des moyens de lecture (10) pour lire des étiquettes sur les bagages (4) sur le convoyeur de décharge (3).

12. Système d'enregistrement selon l'une quelconque des revendications précédentes, **caractérisé en ce que** chaque unité d'enregistrement (2) est prévue avec au moins un rideau lumineux (10) pour déterminer les dimensions principales des bagages (4).

13. Système d'enregistrement selon l'une quelconque des revendications précédentes, lorsqu'elle dépend des revendications 1, 5 ou 7, **caractérisé en ce que** les premier (21), deuxième (26) et/ou troisième (22) moyens de communication font partie d'un réseau informatique.

14. Système d'enregistrement selon la revendication 13, **caractérisé en ce que** ledit réseau informatique est Internet.
